(19) Europäisches Patentamt / European Patent Office / Office européen des brevets

(11) **EP 3 536 760 B2**

(12) # NEW EUROPEAN PATENT SPECIFICATION
After opposition procedure

(45) Date of publication and mention
of the opposition decision:
**04.09.2024 Bulletin 2024/36**

(45) Mention of the grant of the patent:
**24.11.2021 Bulletin 2021/47**

(21) Application number: **19164021.8**

(22) Date of filing: **22.01.2016**

(51) International Patent Classification (IPC):
*C09K 5/04* (2006.01)    *C10M 105/38* (2006.01)
*C10M 107/24* (2006.01)    *C10M 107/34* (2006.01)
*F25B 1/00* (2006.01)    *C10N 40/30* (2006.01)
*C10M 171/00* (2006.01)

(52) Cooperative Patent Classification (CPC):
**C09K 5/045; C09K 5/04; C10M 105/38;
C10M 107/24; C10M 107/34; F25B 1/00;**
C09K 2205/22

(54) **COMPOSITION CONTAINING MIXTURE OF FLUORINATED HYDROCARBONS, AND METHOD FOR PRODUCING SAME**

ZUSAMMENSETZUNG MIT EINER MISCHUNG AUS FLUORIERTEN KOHLENWASSERSTOFFEN UND VERFAHREN ZUR HERSTELLUNG DAVON

COMPOSITION CONTENANT UN MÉLANGE D'HYDROCARBURES FLUORÉS ET SON PROCÉDÉ DE PRODUCTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.02.2015 JP 2015030991**

(43) Date of publication of application:
**11.09.2019 Bulletin 2019/37**

(62) Document number(s) of the earlier application(s) in accordance with Art. 76 EPC:
**16752207.7 / 3 141 587**

(73) Proprietor: **DAIKIN INDUSTRIES, LTD.
Osaka-Shi, Osaka 530-8323 (JP)**

(72) Inventors:
• **Itano, Mitsushi
  Osaka, 530-8323 (JP)**
• **Kuroki, Hitomi
  Osaka, 530-8323 (JP)**
• **Tsuchiya, Tatsumi
  Osaka, 530-8323 (JP)**
• **Yamada, Yasufu
  Osaka, 530-8323 (JP)**

(74) Representative: **Hoffmann Eitle
Patent- und Rechtsanwälte PartmbB
Arabellastraße 30
81925 München (DE)**

(56) References cited:
EP-A1- 0 509 673    EP-A1- 0 811 670
EP-A1- 2 308 941    EP-A2- 0 451 692
WO-A1-2005/049759    WO-A1-2009/105512
WO-A1-2015/083834    WO-A2-2010/042781
WO-A2-2010/129416    JP-A- 2014 198 854
JP-A- H06 256 757    US-A1- 2009 278 075
US-A1- 2013 193 369    US-B1- 6 187 219
US-B1- 6 783 691

• ARI: "SPECIFICATIONS FOR FLUOROCARBON
REFRIGERANTS", AIR-CONDITIONING AND
REFRIGERATION INSTITUTE (ARI) STANDARD
700, 1 January 2006 (2006-01-01), pages 1 - 15
• "Specifications for Fluorocarbon Refrigerants",
AHRI STANDARD 700, 1 January 2012
(2012-01-01), pages 1 - 17

**Description**

Technical Field

The present invention relates to a composition comprising a mixture containing fluorinated hydrocarbons that are used as, for example, a refrigerant, and to a method for producing the composition. The present invention also includes a case in which the composition consists of the three basic components contained in the mixture, i.e., difluoromethane (R32), pentafluoroethane (R125), and 1,1,1,2-tetrafluoroethane (R134a).

Background Art

Refrigerants recently used, for example, for air conditioners, refrigerating devices, and refrigerators are mixtures of fluorinated hydrocarbons that contain no chlorine in their molecular structures, such as difluoromethane ($CH_2F_2$, R32, boiling point: -52°C), pentafluoroethane ($CF_3CHF_2$, R125, boiling point: -48°C), 1,1,1-trifluoroethane ($CF_3CH_3$, R143a, boiling point: -48°C), 1,1,1,2-tetrafluoroethane ($CF_3CH_2F$, R134a, boiling point: -26°C), and 1,1-difluoroethane ($CHF_2CH_3$, R152a, boiling point: -24°C) .

Among the above fluorinated hydrocarbons, e.g. a ternary mixed refrigerant of R32/R125/R134a in which the proportions thereof are 23/25/52 wt% (R407C) and a ternary mixed refrigerant of R125/143a/R134a in which the proportions thereof are 44/52/4 wt% (R404A) have been proposed, and R404A is currently widely used as a refrigerant for freezing and refrigerated storage (for example, JP-B-2869038 and US-B-8,168,077).

However, the global warming potential (GWP) of R404A is as high as 3922, which is equal to or higher than that of $CHClF_2$ (R22), which is a chlorine-containing fluorinated hydrocarbon. There is thus a desire to develop, as alternative refrigerants for R404A, a refrigerant and refrigerant composition that have, for example, a non-flammability similar to that of R404A, a refrigerating capacity that can replace that of R404A, a ratio of refrigerating capacity to power consumed in a refrigeration cycle (coefficient of performance (COP)) that is equal or superior to that of R404A, and a lower GWP than that of R404A.

EP-A-0 811 670 discloses a ternary mixture refrigerant which can be used as a substitute for R22 and a heat pump apparatus utilizing the same, the ternary mixture refrigerant being in a composition range defined by a straight line A connecting points $a_1$ (R32/R134a = 43/57 wt%) and $a_2$ (R125/R134a = 73/27 wt%), a line B connecting points $b_1$ (R32/R134a = 21/79 wt%) and $b_2$ (R125/R134a = 55/45 wt%), a line D connecting point $d_1$ (R32/R125 = 60/40 wt%) and a vertex of R134a, and a line E connecting points $e_1$ (R32/R125 = 53/47 wt%) and $e_2$ (R32/R134a = 19/81 wt%) in a ternary composition diagram of R32, R125 and R134a.

Summary of Invention

Technical Problem

An object of the present invention is to provide, as alternative refrigerants for the R404A that is currently widely used, a refrigerant and refrigerant composition that have, for example, a non-flammability similar to that of R404A, a refrigerating capacity that can replace that of R404A, a COP equal or superior to that of R404A, and a lower GWP than that of R404A. The definition of non-flammability in the present specification conforms to U.S. ASHRAE Standard 34-2013.

Solution to Problem

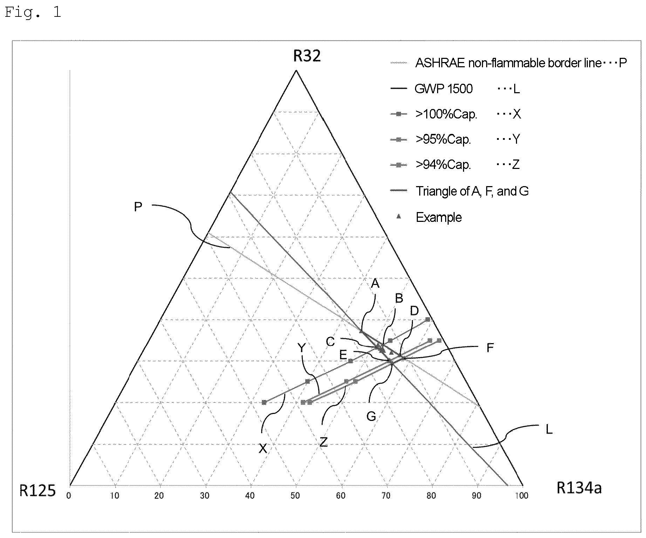

The present inventors conducted extensive research to achieve the above object, and found that the above object can be achieved by a composition comprising a mixture containing fluorinated hydrocarbons, the composition ratio of the fluorinated hydrocarbons contained in the mixture falling within a triangle having specific three points as vertices in a ternary composition diagram (Fig. 1) in which the sum of the concentrations of difluoromethane (R32), pentafluoroethane (R125), and 1,1,1,2-tetrafluoroethane (R134a) is 100 wt%. The present invention has been accomplished through further research based on the above findings.

Specifically, the present invention provides a composition comprising a mixture containing fluorinated hydrocarbons, the mixture comprising $\geq$ 99.5 wt.-% of a total of difluoromethane (R32), pentafluoroethane (R125) and 1,1,1,2-tetrafluoroethane (R134a), and the composition ratio of R32, R125 and R134a in the mixture falls within a triangle having the points A, F and G as vertices in a ternary composition diagram in which the sum of R32, R125 and R134a is 100 wt.-%:

> A: R32/R125/R134a = 37.3/17.0/45.7 wt%
> F: R32/R125/R134a = 30.7/10.9/58.4 wt%
> G: R32/R125/R134a = 29.4/14.1/56.5 wt%,

wherein the composition ratio of R32, R125 and R134a in the mixture is in the ranges of (32.5±1) wt.-% R32, (15.0±1) wt.-% R125 and (52.5±2) wt.-% R134a.

Also, the invention provides the use of the above composition (also "the present composition" hereinafter) in at least one of refrigerators, freezers, water coolers, ice machines, refrigerating showcases, freezing showcases, freezing and refrigerating units, refrigerating devices for freezing and refrigerating warehouses, chillers (chilling units), turbo refrigerators, and screw refrigerators.

Yet further, the invention provides a refrigeration method comprising operating a refrigeration cycle using the present composition, as well as a refrigerating device comprising the present composition.

Even further, the invention provides a method for producing the present composition comprising mixing R32, R125 and R134a in the specified ratios and amounts.

Preferred embodiments of the invention are as defined in the appended dependent claims and/or in the following detailed description.

Advantageous Effects of Invention

The present invention makes it possible to obtain a composition comprising a mixture containing fluorinated hydrocarbons that has, for example, a non-flammability similar to that of R404A, a refrigerating capacity that can replace that of R404A, a COP equal or superior to that of R404A, and a lower GWP than that of R404A because the composition ratio of the mixture falls within a triangle having the following three points as vertices in a ternary composition diagram for R32, R125, and R134a indicated by the triangular coordinates of Fig. 1:

point A (R32/R125/R134a = 37.3/17.0/45.7 wt%),
point F (R32/R125/R134a = 30.7/10.9/58.4 wt%), and
point G (R32/R125/R134a = 29.4/14.1/56.5 wt%).

In the present composition, the composition ratio of R32, R125 and R134a in the mixture is in the ranges of (32.5±1) wt.-% R32, (15.0±1) wt.-% R125 and (52.5±2) wt.-% R134a.

Brief Description of Drawings

Fig. 1 illustrates a ternary composition diagram for R32, R125, and R134a in which the present compositions of mixtures (in order from biggest to smallest triangular range, a triangle defined by points A, F, and G, a triangle defined by points A, D, and E, and a triangle defined by points A, B, and C) are shown.

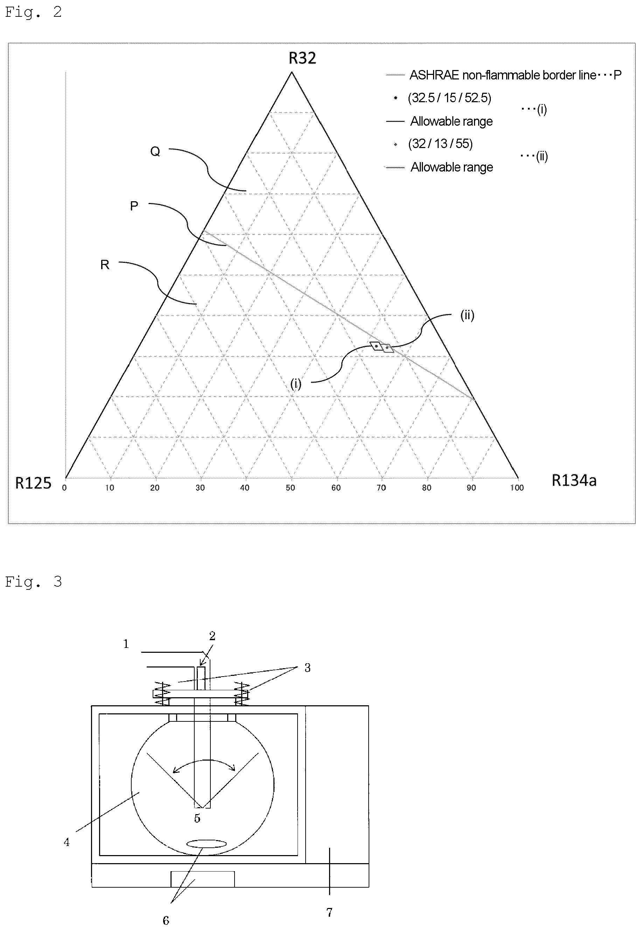

Fig. 2 illustrates a ternary composition diagram for R32, R125, and R134a in which P: ASHRAE non-flammable border line, Q: ASHRAE flammable region, and R: ASHRAE non-flammable region are shown. The diagram also shows the relationship between the allowable range (including an allowable error) set for each refrigerant in the production of a mixed refrigerant and criteria for determining whether the mixed refrigerant is classified as a mixed refrigerant that is non-flammable according to ASHRAE or a mixed refrigerant that is flammable according to ASHRAE.

Fig. 3 illustrates a schematic view of an apparatus used in a flammability test.

Description of Embodiments

The present composition comprises a mixture containing fluorinated hydrocarbons, the mixture comprising ≥ 99.5 wt.-% of a total of difluoromethane (R32), pentafluoroethane (R125) and 1,1,1,2-tetrafluoroethane (R134a), and the composition ratio of R32, R125 and R134a in the mixture falls within a triangle having the following three points as vertices in a ternary composition diagram (Fig. 1) in which the sum of the concentrations of R32, R125, and R134a is 100 wt%:

point A (R32/R125/R134a = 37.3/17.0/45.7 wt%),
point F (R32/R125/R134a = 30.7/10.9/58.4 wt%), and
point G (R32/R125/R134a = 29.4/14.1/56.5 wt%),

wherein the composition ratio of R32, R125 and R134a in the mixture is in the ranges of (32.5±1) wt.-% R32, (15.0±1) wt.-% R125 and (52.5±2) wt.-% R134a.

The present composition has, for example, a non-flammability similar to that of R404A, a refrigerating capacity that can replace that of R404A, a COP equal or superior to that of R404A, and a lower GWP than that of R404A.

More specifically, since the present composition is non-flammable according to ASHRAE like R404A (details of the definition are described later), it is safer than flammable refrigerants and can be used in a wide range of applications.

The refrigerating capacity of the present composition can replace that of R404A. More specifically, the refrigerating capacity of the present composition is preferably ≥ 94%, more preferably ≥ 95%, and even more preferably ≤ 100%, relative to that of R404A.

The COP of the present composition is equal or superior to that of R404A (≥ 100%), more preferably ≥ 105, and even more preferably ≥ 110, relative to that of R404A.

Moreover, the present composition has a GWP of ≤ 1500, and thus can notably reduce a burden on the environment from a global warming perspective compared with other general-purpose refrigerants.

R404A is a refrigerant currently widely used for freezing and refrigerated storage, and the present composition can be an alternative refrigerant for R404A.

In the present composition, the mixture described above may consist of three basic components, i.e., difluoromethane (R32), pentafluoroethane (R125), and 1,1,1,2-tetrafluoroethane (R134a), or may comprise one or more components that are different from the three basic components (referred to as "other components") in addition to the three basic components. Hereinafter, difluoromethane (R32), pentafluoroethane (R125), and 1,1,1,2-tetrafluoroethane (R134a) are referred to as "three basic components" and one or more components that are different from the three basic components are referred to as "other components." Other components are described in detail later. The present composition may consist of the mixture, or may comprise any additives described later, such as a refrigerant oil, in addition to the mixture.

When the mixture contains other components, the mixture preferably contains other components in amounts such that the functions of the three basic components are not impaired. From this viewpoint, the content of other components in the mixture is ≤ 0.5 wt%, preferably ≤ 0.3 wt%, and more preferably ≤ 0.1 wt%.

Mixture containing fluorinated hydrocarbons

in the present composition (Embodiment 1) the composition ratio of the fluorinated hydrocarbons contained in the mixture falling within a triangle having the points A, F and G as vertices in a ternary composition diagram (Fig. 1) in which the sum of the concentrations of R32, R125 and R134a is 100 wt%.

As is described in detail below, in Fig. 1, a straight line passing through two points, i.e., point A and point F, shows an ASHRAE non-flammable border line; a straight line passing through two points, i.e., point A and point G, shows a line indicating a composition ratio at which the GWP is 1500; and a straight line passing through two points, i.e., point F and point G, shows a line indicating a composition ratio at which the refrigerating capacity is 94% relative to that of R404A.

In view of improving the refrigerating capacity, preferred embodiments are, the following Embodiments 2 or 3, in which the range of the triangle is smaller than the range of the triangle of Embodiment 1.

In Embodiment 2, the composition ratio of the fluorinated hydrocarbons contained in the mixture falls within a triangle having the following three points as vertices in a ternary composition diagram (Fig. 1) in which the sum of the concentrations of R32, R125, and R134a is 100 wt%:

point A (R32/R125/R134a = 37.3/17.0/45.7 wt%),
point D (R32/R125/R134a = 31.4/11.5/57.1 wt%), and
point E (R32/R125/R134a = 30.2/14.4/55.4 wt%).

In Embodiment 2, a straight line passing through two points, i.e., point D and point E, shows a line indicating a composition ratio in which the refrigerating capacity is 95% relative to that of R404A.

In Embodiment 3, the composition ratio of the fluorinated hydrocarbons contained in the mixture falls within a triangle having the following three points as vertices in a ternary composition diagram (Fig. 1) in which the sum of the concentrations of R32, R125, and R134a is 100 wt%:

point A (R32/R125/R134a = 37.3/17.0/45.7 wt%),
point B (R32/R125/R134a = 34.0/13.9/52.1 wt%), and
point C (R32/R125/R134a = 33.3/15.5/51.2 wt%).

In Embodiment 3, a straight line passing through two points, i.e., point B and point C, shows a line indicating a composition ratio at which the refrigerating capacity is 100% relative to that of R404A.

The technical meaning of each point in Fig. 1 is described in detail below.

In Fig. 1, when the wt% of R32 = x, the wt% of R125 = y, and the wt% of R134a = z, a line segment indicating an ASHRAE non-flammable border line is approximated by a line segment represented by the following equations.

ASHRAE non-flammable border line: a straight line passing through two points, i.e., point A and point F (line segment P of Fig. 1)

$$y = 0.9286x - 17.643$$

$$z = 100 - x - y$$

$$19 \leq x \leq 61$$

The ASHRAE flammability classification of refrigerants is now described.

The ASHRAE flammability classification of refrigerants is performed based on ANSI/ASHRAE Standard 34-2013. Refrigerants classified as Class 1 are non-flammable refrigerants. That is, the present composition being non-flammable according to ASHRAE means that the mixture containing fluorinated hydrocarbons used in the present invention (in particular, the three basic components) is classified as Class 1 in flammability classification.

More specifically, a leak test during storage, transportation, and use is performed based on ANSI/ASHRAE 34-2013 to specify the worst case of fractionation for flammability (WCFF). When the WCFF composition can be identified as being non-flammable in a test based on ASTM E681-09 (a standard test method for concentration limits of flammability of chemicals (vapors and gases)), it is classified as Class 1.

In Fig. 1, the R125 side from the line segment AF is classified as a mixed refrigerant that is non-flammable according to ASHRAE, whereas the R32 side from the line segment AF is classified as a mixed refrigerant that is flammable according to ASHRAE (Class 2: slightly flammable mixed refrigerants, Class 3: flammable mixed refrigerants).

However, in the production of a mixed refrigerant, an allowable range (including an allowable error) is set for each refrigerant. Thus, even if the center composition of the mixed refrigerant is on the R125 side from the line segment AF of Fig. 1, when the allowable ranges are not all on the R125 side from the line segment AF, the mixed refrigerant is not defined as a mixed refrigerant that is non-flammable according to ASHRAE.

For example, in the case where R32 = (32.5±1) wt%, R125 = (15.0±1) wt%, and R134a = (52.5±2) wt%, all of the allowable ranges are on the R125 side from the line segment AF as shown in Fig. 2, and thus, the case is classified as a mixed refrigerant that is non-flammable according to ASHRAE. On the other hand, in the case where R32 = (32.0±1) wt%, R125 = (15.0±1) wt%, and R134a = (55.0±2) wt%, the allowable ranges are partially on the R32 side from the line segment AF, and thus, a mixed refrigerant in which these allowable ranges are set is classified as a mixed refrigerant that is flammable according to ASHRAE.

In Fig. 1, when the wt% of R32 = x, the wt% of R125 = y, and the wt% of R134a = z, a line segment indicating a composition ratio at which GWP = 1500 is approximated by a line segment represented by the following equations.

Line segment indicating a composition ratio at which GWP = 1500: a straight line passing through two points, i.e., points A and G (line segment L of Fig. 1)

$$y = 0.3644x + 3.400$$

$$z = 100 - x - y$$

$$0 \leq x \leq 70.8$$

In addition, line segments indicating composition ratios at which the refrigerating capacity is 94%, 95%, and 100% relative to that of R404A are approximated by line segments represented by the following equations.

Line segment indicating a composition ratio at which the refrigerating capacity is 94% relative to that of R404A: a straight line passing through two points, i.e., points F and G (line segment Z of Fig. 1)

$$y = -2.35x + 83.25$$

$$25 \leq x \leq 35$$

Line segment indicating a composition ratio at which the refrigerating capacity is 95% relative to that of R404A: a straight line passing through two points, i.e., points D and E (line segment Y of Fig. 1)

$$y = -2.35x + 85.25$$

$$\overline{25 \leq x \leq 35}$$

Line segment indicating a composition ratio at which the refrigerating capacity is 100% relative to that of R404A: a straight line passing through two points, i.e., points B and C (line segment X of Fig. 1)

$$y = -2.26x + 90.8$$

$$30 \leq x \leq 35$$

Components other than the three basic components

The mixture contained in the present composition may further contain a tiny amount of water in addition to the three basic components (R32, R125, and R134a). The amount of water is preferably $\leq 0.1$ parts by weight (pbw), per 100 pbw of the mixture. When the mixture contains a tiny amount of water, the double bonds in the molecules of unsaturated fluorinated hydrocarbons that may be contained in the composition can be stably present, and oxidation of unsaturated fluorinated hydrocarbons is less likely to occur, resulting in improved stability of the composition.

The mixture contained in the present composition may contain other component(s) (fluorinated hydrocarbon(s) that are different from the three basic components) in addition to the three basic components (R32, R125, and R134a). The fluorinated hydrocarbon(s) as other component(s) are not particularly limited, and, are, for example, at least one fluorinated hydrocarbon selected from HCFC-1122, HCFC-124, CFC-1113, and 3,3,3-trifluoropropyne.

The mixture contained in the present composition may contain, in addition to the three basic components (R32, R125, and R134a), at least one halogenated organic compound of the formula $C_mH_nX_p$ (1), wherein X each independently is F, Cl or Br, m is 1 or 2, p is $\geq 1$ and $(2m+2) \geq (n+p)$, as other component(s). The at least one halogenated organic compound as other component(s) is not particularly limited. Preferable examples include difluorochloromethane, chloromethane, 2-chloro-1,1,1,2,2-pentafluoroethane, 2-chloro-1,1,1,2-tetrafluoroethane, 2-chloro-1,1-difluoroethylene and trifluoroethylene.

The mixture contained in the present composition may contain, in addition to the three basic components (R32, R125, and R134a), at least one organic compound of the formula $C_mH_nX_p$ (2), wherein X each independently is an atom other than halogen, m is 1 or 2, p is $\geq 1$ and $(2m+2) \geq (n+p)$, as other component(s). The at least one organic compound as other component(s) is not particularly limited. Preferable examples include propane and isobutane.

As described above, when the mixture contains other components, the content of other components in the mixture, whether other components are used singly or in a combination of two or more, is $\leq 0.5$ wt%, preferably $\leq 0.3$ wt%, and more preferably $\leq 0.1$ wt%, as the total content amount.

Optional additives

The present composition may appropriately contain various additives in addition to the mixture.

The present composition may further contain a refrigerant oil. The refrigerant oil is not particularly limited and can be suitably selected from commonly used refrigerant oils. In this case, a refrigerant oil that is more excellent in terms of, for example, the effect of improving miscibility with the mixture and stability of the mixture, may be appropriately selected, if necessary.

Although there is no particular limitation, the stability of the mixture can be evaluated by a commonly used method. Examples of such methods include an evaluation method using the amount of free fluorine ions as an index according to ASHRAE Standard 97-2007, and the like. There is, for example, another evaluation method using the total acid number as an index. This method can be performed, for example, according to ASTM D 974-06.

Preferred as the type of the refrigerant oil is, specifically, for example, at least one member selected from the group consisting of polyalkylene glycol (PAG), polyol ester (POE), and polyvinyl ether (PVE).

The refrigerant oil to be used may have, for example, a kinematic viscosity at 40°C of 5-400 cSt. When the refrigerant oil has a kinematic viscosity within this range, it is preferable in terms of lubricity.

The concentration of the refrigerant oil is not particularly limited, and may be generally 10-50 wt%, relative to the entire composition.

The present composition may further contain one or more tracers. The one or more tracers are added to the present composition at a detectable concentration so that, when the present composition is diluted, contaminated, or undergoes any other change, the change can be traced. There is no limitation on the tracers. Preferable examples include hydrofluorocarbons, deuterated hydrocarbons, deuterated hydrofluorocarbons, perfluorocarbons, fluoroethers, brominated compounds, iodinated compounds, alcohols, aldehydes, ketones and nitrous oxide ($N_2O$). Particularly preferred are hydrofluorocarbons or fluoroethers.

The present composition may further contain a compatibilizer. The type of compatibilizer is not particularly limited. Preferable examples include polyoxyalkylene glycol ethers, amides, nitriles, ketones, chlorocarbons, esters, lactones, aryl ethers, fluoroethers and 1,1,1-trifluoroalkans. Particularly preferred are polyoxyalkylene glycol ethers.

The present composition may further contain one or more ultraviolet fluorescent dyes. There is no limitation on the ultraviolet fluorescent dyes. Preferable examples include naphthalimide, coumarin, anthracene, phenanthrene, xanthene, thioxanthene, naphthoxanthene, and fluorescein, and derivatives thereof. Either naphthalimide or coumarin, or both are particularly preferable.

The present composition may further contain, for example, a stabilizer and a polymerization inhibitor, if necessary.

Examples of stabilizers include, but are not particularly limited to, (i) aliphatic nitro compounds, such as nitromethane and nitroethane; and aromatic nitro compounds, such as nitrobenzene and nitrostyrene; (ii) ethers, such as 1,4-dioxane; amines, such as 2,2,3,3,3-pentafluoropropylamine and diphenylamine; butylhydroxyxylene and benzotriazole. The stabilizers can be used singly or in a combination of two or more.

The concentration of the stabilizer varies depending on the type of stabilizer, but can be determined within a range in which the properties of the composition are not impaired. The concentration of the stabilizer is generally preferably 0.01-5 pbw, and more preferably 0.05-2 pbw, per 100 pbw of the mixture.

Examples of polymerization inhibitors include, but are not particularly limited to, 4-methoxy-1-naphthol, hydroquinone, hydroquinonemethyl ether, dimethyl-t-butylphenol, 2,6-di-tert-butyl-p-cresol and benzotriazole.

The concentration of the polymerization inhibitor is generally preferably 0.01-5 pbw, and more preferably 0.05-2 pbw, per 100 pbw of the mixture.

In one embodiment of the present invention, an object can be refrigerated by a method comprising the step of operating a refrigeration cycle using the present composition. For example, the present composition can be circulated via a compressor to form the refrigeration cycle.

It is also possible to produce an apparatus for forming a refrigeration cycle in which the present composition is circulated via a compressor.

Examples of refrigerating devices that can use the present composition include, but are not limited to, refrigerators, freezers, water coolers, ice machines, refrigerating showcases, freezing showcases, freezing and refrigerating units, refrigerating devices used, for example, for freezing and refrigerating warehouses, chillers (chilling units), turbo refrigerators and screw refrigerators.

Method for producing composition

The method for producing the present composition comprises mixing R32, R125, and R134a such that the composition ratio thereof is adjusted to fall within a triangle having the following three points as vertices in a ternary composition diagram (Fig. 1) in which the sum of the concentrations of R32, R125, and R134a is 100 wt%:

> point A (R32/R125/R134a = 37.3/17.0/45.7 wt%),
> point F (R32/R125/R134a = 30.7/10.9/58.4 wt%), and
> point G (R32/R125/R134a = 29.4/14.1/56.5 wt%).

In the present composition, the composition ratio of R32, R125 and R134a in the mixture is in the ranges of (32.5±1) wt.-% R32, (15.0±1) wt.-% R125 and (52.5±2) wt.-% R134a.

The method for producing the composition of present Embodiment 2 comprises mixing R32, R125, and R134a such that the composition ratio thereof is adjusted to fall within a triangle having the following three points as vertices in a ternary composition diagram (Fig. 1) in which the sum of the concentrations of R32, R125, and R134a is 100 wt%:

> point A (R32/R125/R134a = 37.3/17.0/45.7 wt%),
> point D (R32/R125/R134a = 31.4/11.5/57.1 wt%), and
> point E (R32/R125/R134a = 30.2/14.4/55.4 wt%).

The method for producing the composition of present Embodiment 3 comprises mixing R32, R125, and R134a such that the composition ratio thereof is adjusted to fall within a triangle having the following three points as vertices in a ternary composition diagram (Fig. 1) in which the sum of the concentrations of R32, R125, and R134a is 100 wt%:

point A (R32/R125/R134a = 37.3/17.0/45.7 wt%),
point B (R32/R125/R134a = 34.0/13.9/52.1 wt%), and
point C (R32/R125/R134a = 33.3/15.5/51.2 wt%).

The compositions of Embodiments 1-3 can be produced by the above methods.

Examples

The present invention is described in detail below with reference to Examples.

Examples 1-13 and Comparative Examples 1-12 (Examples 1-3 and 9-13 do not form part of the present invention)

The GWP of each of R404A and mixed refrigerants of R32, R125, and R134a was evaluated based on the values described in the Intergovernmental Panel on Climate Change (IPCC) fourth report.
The COP and refrigerating capacity of each of R404A and the mixed refrigerants of R32, R125, and R134a were determined by performing refrigeration cycle theoretical calculations for the refrigerant and mixed refrigerants using the National Institute of Science and Technology (NIST) and Reference Fluid Thermodynamic and Transport Properties Database (Refprop 9.0) under the following conditions.

Evaporation temperature -40°C
Condensation temperature 40°C
Superheating temperature 20K
Supercooling temperature 0K
Compressor efficiency 70%

In Fig. 1, the proportions of the components of the compositions of the Examples are indicated by solid triangles (▲).
Tables 1 and 2 show the GWP, COP, and refrigerating capacity calculated based on these results. Regarding the COP and refrigerating capacity, the percentages relative to those of R404A are shown.
The coefficient of performance (COP) was calculated according to the following equation.

COP = (refrigerating capacity or heating capacity) / amount of electrical power consumed

The flammability of the mixture of the three basic components used in the composition was evaluated according to U.S. ASHRAE Standard 34-2013. The flammability test was conducted in accordance with ASTM E681-09. Fig. 2 shows a non-flammable border line (P), a flammable region (Q), and a non-flammable region (R).
A 12-L spherical glass flask was used so that the combustion state could be visually observed and photographically recorded. When excessive pressure was generated by combustion, gas was allowed to escape from the upper lid. Ignition was achieved by electric discharge from electrodes disposed at one-third the distance from the bottom.

Test conditions

Test vessel: 280 mm φ spherical (internal volume: 12 liters)
Test temperature: (60±3)°C
Pressure: (101.3±0.7) kPa
Water: (0.0088±0.0005) g per gram of dry air
Mixing ratio of composition/air: 1 vol.% increments ±0.2 vol.% Composition mixture: ±0.1 wt%
Ignition method: AC discharge, voltage: 15 kV, electric current: 30 mA, neon transformer
Electrode spacing: 6.4 mm (1/4 inch)
Spark: (0.4±0.05) seconds
Evaluation criteria: When the flame propagation extends at an angle of > 90° from the ignition point, it was evaluated as flammable.

The composition ratio of R32, R125, and R134a (x/y/z wt%) in the non-flammability limit almost satisfied the relationship of the following equations (1)-(3).

$$19 \leq x \leq 61 \quad (1)$$

$$y = 0.9286x - 17.643 \quad (2)$$

$$z = 100 - x - y \quad (3)$$

The results revealed that the present composition is non-flammable, and causes no combustion, even when mixed with air at any ratio.

Table 1

| Item | | Unit | R404A | Example 1 Reference Example | Example 2 Reference Example | Example 3 Reference Example | Example 4 | Example 5 | Example 6 | Example 7 | Example 8 | Example 9 Reference Example | Example 10 Reference Example | Example 11 Reference Example | Example 12 Reference Example | Example 13 Reference Example |
|---|---|---|---|---|---|---|---|---|---|---|---|---|---|---|---|---|
| | | | | Point A | Within △ABC | Point B | Point C | Within △ADE | Within △ADE | Within △ADE | Within △ADE | Within △ADE | Point D | Point E | Point F | Point G |
| Composition | R32 | mass % | 0 | 37.3 | 34.0 | 34.0 | 33.3 | 32.5 | 32.5 | 33.0 | 33.0 | 32.0 | 31.4 | 30.2 | 30.7 | 29.4 |
| | R125 | mass % | 44.0 | 17.0 | 15.0 | 13.9 | 15.5 | 14.5 | 15.0 | 14.5 | 15.0 | 13.0 | 11.5 | 14.4 | 10.9 | 14.1 |
| | R134a | mass % | 4.0 | 45.7 | 51.0 | 52.1 | 51.2 | 53.0 | 52.5 | 52.5 | 52.0 | 55.0 | 57.1 | 55.4 | 58.4 | 56.5 |
| | R143a | mass % | 52.0 | 0 | 0 | 0 | 0 | 0 | 0 | 0 | 0 | 0 | 0 | 0 | 0 | 0 |
| GWP | | year | 3922 | 1500 | 1484 | 1461 | 1500 | 1485 | 1495 | 1481 | 1491 | 1458 | 1431 | 1500 | 1424 | 1500 |
| Performance | Coefficient of performance | % (relative to that of R404A) | 100 | 111 | 112 | 112 | 112 | 112 | 112 | 112 | 112 | 112 | 112 | 112 | 112 | 112 |
| | Refrigerating capacity | % (relative to that of R404A) | 100 | 106 | 101 | 100 | 100 | 98 | 99 | 99 | 99 | 97 | 95 | 95 | 94 | 94 |
| Flammable/non-flammable | | - | nonflammable | nonflammable | nonflammable | nonflammable | nonflammable | nonflammable | nonflammable | nonflammable | nonflammable | nonflammable | nonflammable | nonflammable | nonflammable | nonflammable |

EP 3 536 760 B2

Table 2

| Item | | Unit | R404A | Comparative Example | | | | | | | | | | | | |
|---|---|---|---|---|---|---|---|---|---|---|---|---|---|---|---|---|
| | | | | 1 | 2 | 3 | 4 | 5 | 6 | 7 | 8 | 9 | 10 | 11 | 12 |
| Composition | R32 | mass % | 0 | 20.0 | 25.0 | 30.0 | 35.0 | 40.0 | 20.0 | 25.0 | 30.0 | 35.0 | 20.0 | 25.0 | 35.0 |
| | R125 | mass % | 44.0 | 47.0 | 35.0 | 23.0 | 11.7 | 1.0 | 38.5 | 26.5 | 14.5 | 3.0 | 37.0 | 24.5 | 1.0 |
| | R134a | mass % | 4.0 | 33.0 | 40.0 | 47.0 | 53.3 | 59.0 | 41.5 | 48.5 | 55.5 | 62.0 | 43.0 | 50.5 | 64.0 |
| | R143a | mass % | 52.0 | 0 | 0 | 0 | 0 | 0 | 0 | 0 | 0 | 0 | 0 | 0 | 0 |
| GWP | | year | 3922 | 2252 | 1966 | 1680 | 1408 | 1149 | 2076 | 1790 | 1504 | 1228 | 2045 | 1748 | 1186 |
| Performance | Coefficient of performance | % (relative to that of R404A ) | 100 | 107 | 109 | 111 | 112 | 113 | 109 | 110 | 112 | 113 | 109 | 111 | 113 |
| | Refrigerating capacity | % (relative to that of R404A ) | 100 | 100 | 100 | 100 | 100 | 100 | 95 | 95 | 95 | 95 | 94 | 94 | 94 |
| Flarrmable/ nonflammable | | - | nonflammable | nonflammable | nonflammable | nonflammable | flammable | flammable | nonflammable | nonflammable | nonflammable | flammable | nonflammable | nonflammable | flammable |

In Comparative Examples 1-5, compositions having composition ratios at which the refrigerating capacity was 100% relative to that of R404A were obtained. The compositions of Comparative Examples 1-3 had a GWP of > 1500, and the compositions of Comparative Examples 4 and 5 were flammable.

In Comparative Examples 6-9, compositions having composition ratios at which the refrigerating capacity was 95% relative to that of R404A were obtained. The compositions of Comparative Examples 6-8 had a GWP of > 1500, and the composition of Comparative Example 9 was flammable.

In Comparative Examples 10-12, compositions having composition ratios at which the refrigerating capacity was 94% relative to that of R404A were obtained. The compositions of Comparative Examples 10 and 11 had a GWP of > 1500, and the composition of Comparative Example 12 was flammable.

Description of Reference Numerals

A: Composition ratio of Example 1
B: Composition ratio of Example 3
C: Composition ratio of Example 4
D: Composition ratio of Example 10
E: Composition ratio of Example 11
F: Composition ratio of Example 12
G: Composition ratio of Example 13
L: Approximation line segment of line segment indicating GWP = 1500
X: Approximation line segment of line segment indicating a composition ratio at which the refrigerating capacity is 100% (relative to that of R404A)
Y: Approximation line segment of line segment indicating a composition ratio at which the refrigerating capacity is 95% (relative to that of R404A)
Z: Approximation line segment of line segment indicating a composition ratio at which the refrigerating capacity is 94% (relative to that of R404A)
P: ASHRAE non-flammable border line
Q: ASHRAE flammable region
R: ASHRAE non-flammable region
1: Ignition source
2: Sample inlet
3: Springs
4: 12-liter glass flask
5: Electrodes
6: Stirrer
7: Insulated chamber

**Claims**

1. A composition comprising a mixture containing fluorinated hydrocarbons, the mixture comprising ≥ 99.5 wt.-% of a total of difluoromethane (R32), pentafluoroethane (R125) and 1,1,1,2-tetrafluoroethane (R134a), and the composition ratio of R32, R125 and R134a in the mixture falls within a triangle having the points A, F and G as vertices in a ternary composition diagram in which the sum of R32, R125 and R134a is 100 wt.-%:

   A: R32/R125/R134a = 37.3/17.0/45.7 wt%
   F: R32/R125/R134a = 30.7/10.9/58.4 wt%
   G: R32/R125/R134a = 29.4/14.1/56.5 wt%,

   wherein the composition ratio of R32, R125 and R134a in the mixture is in the ranges of (32.5±1) wt.-% R32, (15.0±1) wt.-% R125 and (52.5±2) wt.-% R134a.

2. The composition of claim 1, wherein the mixture further comprises at least one of HCFC-1122, HCFC-124, CFC-1113, and 3,3,3-trifluoropropyne.

3. The composition of claim 1 or 2, wherein the mixture further comprises at least one halogenated organic compound of the formula $C_mH_nX_p$ (1), wherein X each independently is F, Cl or Br, *m* is 1 or 2, p is $\geq$ 1 and $(2m+2) \geq (n+p)$.

4. The composition of any of claims 1-3, wherein the mixture further comprises water.

5. The composition of claim 1, wherein the mixture consists of R32, R125, and R134a.

6. The composition of any of claims 1-5, wherein the mixture has a GWP of $\leq$ 1500, and the refrigerating capacity of the mixture is $\geq$ 94% relative to that of R404A.

7. The composition of any of claims 1-6, comprising a refrigerant oil.

8. The composition of claim 7, wherein the refrigerant oil comprises at least one polymer selected from polyalkylene glycol (PAG), polyol ester (POE), and polyvinyl ether (PVE).

9. The composition of any of claims 1-8, comprising at least one substance selected from tracers, compatibilizers, ultraviolet fluorescent dyes, stabilizers, and polymerization inhibitors.

10. The use of the composition of any of claims 1-9 in at least one of refrigerators, freezers, water coolers, ice machines, refrigerating showcases, freezing showcases, freezing and refrigerating units, refrigerating devices for freezing and refrigerating warehouses, chillers (chilling units), turbo refrigerators, and screw refrigerators.

11. A refrigeration method comprising operating a refrigeration cycle using the composition of any of claims 1-9.

12. A refrigerating device comprising the composition of any of claims 1-9.

13. A method for producing a composition as defined in claim 1, comprising mixing R32, R125 and R134a in the specified ratios and amounts.

**Patentansprüche**

1. Zusammensetzung, umfassend eine Mischung, das fluorierte Kohlenwasserstoffe enthält, wobei die Mischung insgesamt $\geq$ 99,5 Gew.-% Difluormethan (R32), Pentafluorethan (R125) und 1,1,1,2-Tetrafluorethan (R134a) umfasst und das Zusammensetzungsverhältnis von R32, R125 und R134a in der Mischung innerhalb eines Dreiecks mit den Punkten A, F und G als Eckpunkte in einem Diagramm einer ternären Zusammensetzung fällt, in dem die Summe von R32, R125 und R134a 100 Gew.-% beträgt:

A: R32/R125/R134a = 37,3/17,0/45,7 Gew.-%
F: R32/R125/R134a = 30,7/10,9/58,4 Gew.-%
G: R32/R125/R134a = 29,4/14,1/56,5 Gew.-%,

worin das Zusammensetzungsverhältnis von R32, R125 und R134a in der Mischung in die Bereiche von (32,5$\pm$1) Gew.-% R32, (15,0$\pm$1) Gew.-% R125 und (52,5$\pm$2) Gew.-% R134a fällt.

2. Zusammensetzung gemäß Anspruch 1, worin die Mischung ferner mindestens eines von HCFC-1122, HCFC-124, CFC-1113 und 3,3,3-Trifluorpropin umfasst.

3. Zusammensetzung gemäß Anspruch 1 oder 2, worin die Mischung ferner mindestens eine halogenierte organische Verbindung der Formel $C_mH_nX_p$ (1) umfasst, worin X jeweils unabhängig für F, Cl oder Br steht, m für 1 oder 2 steht, p für $\geq$ 1 steht und $(2m+2) \geq (n+p)$.

4. Zusammensetzung gemäß einem der Ansprüche 1-3, worin die Mischung ferner Wasser umfasst.

5. Zusammensetzung gemäß Anspruch 1, worin die Mischung aus R32, R125 und R134a besteht.

6. Zusammensetzung gemäß einem der Ansprüche 1-5, worin die Mischung ein relatives Treibhauspotential (GWP = "global warming potential") von $\leq$ 1500 aufweist und die Kälteleistung der Mischung $\geq$ 94% relativ zu der von R404A ist.

**7.** Zusammensetzung gemäß einem der Ansprüche 1-6, umfassend ein Kältemittelöl.

**8.** Zusammensetzung gemäß Anspruch 7, worin das Kältemittelöl mindestens ein Polymer umfasst, ausgewählt aus Polyalkylenglycol (PAG), Polyolester (POE) und Polyvinylether (PVE).

**9.** Zusammensetzung gemäß einem der Ansprüche 1-8, umfassend mindestens eine Substanz, ausgewählt aus Tracern, Kompatibilisatoren, ultravioletten Fluoreszenzfarbstoffen, Stabilisatoren und Polymerisationsinhibitoren.

**10.** Verwendung der Zusammensetzung gemäß einem der Ansprüche 1-9 in mindestens einem aus Kühlschränken, Tiefkühlern, Wasserkühlern, Eismaschinen, Kühlvitrinen, Gefriervitrinen, Gefrier- und Kühleinheiten, Kühlgeräten zum Gefrieren und Kühlen von Lagerhallen, Chiller (Kühlaggregaten), Turbokühlschränken und Schraubenkühlschränken.

**11.** Kühlverfahren, umfassend das Betreiben eines Kühlkreislaufs unter Verwendung der Zusammensetzung gemäß einem der Ansprüche 1-9.

**12.** Kühlvorrichtung, umfassend die Zusammensetzung gemäß einem der Ansprüche 1-9.

**13.** Verfahren zur Herstellung einer wie in Anspruch 1 definierten Zusammensetzung, umfassend das Mischen von R32, R125 und R134a in den angegebenen Verhältnissen und Mengen.

## Revendications

**1.** Composition comprenant un mélange contenant des hydrocarbures fluorés, le mélange comprenant ≥ 99,5 % en poids d'un total de difluorométhane (R32), pentafluoroéthane (R125) et 1,1,1,2-tétrafluoroéthane (R134a), et le rapport de composition de R32, R125 et R134a dans le mélange se situe dans un triangle présentant les points A, F et G en tant que sommets dans un diagramme de composition ternaire dans lequel la somme de R32, R125 et R134a est de 100 % en poids :

A: R32/R125/R134a = 37,3/17,0/45,7 en poids
F: R32/R125/R134a = 30,7/10,9/58,4 en poids
G: R32/R125/R134a = 29,4/14,1/56,5 en poids,

dans laquelle le rapport de composition de R32, R125 et R134a dans le mélange se situe dans les plages de (32,5±1) % en poids de R32, (15,0±1) % en poids de R125 et (52,5±2) % en poids de R134a.

**2.** Composition selon la revendication 1, dans laquelle le mélange comprend en outre au moins l'un parmi HCFC-1122, HCFC-124, CFC-1113 et 3,3,3-trifluoropropyne.

**3.** Composition selon la revendication 1 ou la revendication 2, dans laquelle le mélange comprend en outre au moins un composé organique halogéné de la formule $C_m H_n X_p$ (1), dans laquelle chaque X est indépendamment F, CI ou Br, m est 1 ou 2, p est ≥ 1 et (2m+2) ≥ *(n+p)*.

**4.** Composition selon l'une quelconque des revendications 1 à 3, dans laquelle le mélange comprend en outre de l'eau.

**5.** Composition selon la revendication 1, dans laquelle le mélange consiste en R32, R125 et R134a.

**6.** Composition selon l'une quelconque des revendications 1 à 5, dans laquelle le mélange présente un PRG ≤ 1500, et la capacité frigorifique du mélange est ≥ 94 % par rapport à celle de R404A.

**7.** Composition selon l'une quelconque des revendications 1 à 6, comprenant une huile réfrigérante.

**8.** Composition selon la revendication 7, dans laquelle l'huile réfrigérante comprend au moins un polymère sélectionné parmi le polyalkylène glycol (PAG), l'ester de polyol (POE) et l'éther de polyvinyle (PVE).

**9.** Composition selon l'une quelconque des revendications 1 à 8, comprenant au moins une substance sélectionnée parmi des traceurs, des agents de compatibilité, des colorants fluorescents ultraviolets, des stabilisants et des inhibiteurs de polymérisation.

10. Utilisation de la composition selon l'une quelconque des revendications 1 à 9 dans au moins l'un parmi des réfrigérateurs, des congélateurs, des rafraîchisseurs d'eau, des machines à glace, des armoires vitrées réfrigérées, des armoires vitrées de congélation, des unités de congélation et de réfrigération, des dispositifs de réfrigération pour congeler et réfrigérer des entrepôts, des refroidisseurs (unités de refroidissement), des turbo-réfrigérateurs et des réfrigérateurs à vis.

11. Procédé de réfrigération comprenant le fonctionnement d'un cycle de réfrigération en utilisant la composition selon l'une quelconque des revendications 1 à 9.

12. Dispositif de réfrigération comprenant la composition selon l'une quelconque des revendications 1 à 9.

13. Procédé de production d'une composition telle que définie dans la revendication 1, comprenant le mélange de R32, R125 et R134a selon les rapports et les quantités spécifiés.

Fig. 1

Fig. 2

Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2869038 B
- US 8168077 B
- EP 0811670 A